# FASCICULE DE BREVET EUROPEEN

(11) **EP 3 688 294 B1**
(45) Date de publication et mention de la délivrance du brevet: **28.07.2021**
(21) Numéro de dépôt: 18780189.9
(22) Date de dépôt: 13.09.2018
(51) Int. Cl.: F02C 5/12, F01L 7/06, F23R 7/00

(54) **CHAMBRE DE COMBUSTION À VOLUME CONSTANT ET SYSTÈME DE COMBUSTION POUR TURBOMACHINE ASSOCIÉ**
BRENNKAMMER MIT KONSTANTEM VOLUMEN UND ZUGEHÖRIGES TURBINENMOTORVERBRENNUNGSSYSTEM
CONSTANT VOLUME COMBUSTION CHAMBER AND ASSOCIATED TURBINE ENGINE COMBUSTION SYSTEM

(30) Priorité: 27.09.2017 FR 1758971
(43) Date de publication de la demande: 05.08.2020
(73) Titulaire: SAFRAN, 75015 Paris (FR)
(72) Inventeur: METGE, Pierre, Jean-Baptiste, 77550 Moissy-Cramayel (FR); LEYKO, Matthieu, 77550 Moissy-Cramayel (FR)
(74) Mandataire: Cabinet Beau de Loménie
(86) Numéro de dépôt international: PCT/FR2018/052253
(87) Numéro de publication internationale: WO 2019/063908

(56) Documents cités:
- WO-A1-91/10815
- WO-A1-2014/020275
- FR-A1- 3 032 024
- US-A- 3 650 105
- US-A- 5 558 049

## Description

### Arrière-plan de l'invention

La présente invention se rapporte au domaine général des chambres de combustion de turbomachines d'aéronef et plus particulièrement à un système de combustion à volume constant comprenant une ou plusieurs chambres de combustion.

Des chambres de combustion de moteurs à combustion interne sont décrites par les documents US5558049, US3650105, WO91/10815, WO2014/020275 et FR3032024.

L'invention s'applique à tout type de turbomachines, en particulier aux turboréacteurs, turbopropulseurs, et turbomachines à soufflantes non carénées, aussi connues en anglais sous la dénomination « Open Rotor ».

Une turbomachine d'aéronef conventionnelle comporte de manière connue une ou plusieurs chambres de combustion. Une telle chambre de combustion est alimentée en air sous pression par un module de compresseur. La chambre de combustion comporte un injecteur de carburant qui est apte à injecter du carburant dans le flux d'air admis pour le brûler et provoquer ainsi l'émission de gaz chauds. Ces gaz chauds peuvent ensuite être utilisés pour entraîner une turbine, qui entraîne à son tour le module de compresseur et qui peut également entraîner une soufflante de la turbomachine. La chambre de combustion comprend au moins un port d'admission au travers duquel l'air est introduit à l'intérieur de la chambre, et un port d'échappement au travers duquel les gaz chauds sont évacués à l'extérieur de la chambre.

Dans une telle chambre, le débit de carburant est généralement continu et la combustion fonctionne classiquement selon un cycle dit de Brayton, c'est-à-dire selon un cycle de combustion à pression constante ou « CPC ».

Néanmoins, pour obtenir des gains de consommation spécifiques, il a été envisagé de remplacer la chambre de combustion fonctionnant selon un cycle de Brayton par une pluralité de chambres de combustion fonctionnant selon un cycle de Humphrey, c'est-à-dire selon un cycle de combustion à volume constant ou « CVC ».

Le cycle de combustion à volume constant comprend un temps de combustion (désigné par l'expression « phase de combustion »), un temps d'échappement (désigné par l'expression « phase d'échappement »), et un temps d'admission d'air frais et de balayage des gaz brûlés (désigné par l'expression « phase de balayage »). Durant la phase de combustion, les ports d'admission et d'échappement sont tous les deux fermés. Durant la phase d'échappement, le port d'admission est fermé et le port d'échappement ouvert. Lors de la phase de balayage, les ports d'admission et d'échappement sont tous les deux ouverts.

La chambre de combustion est ainsi communément munie d'un mécanisme d'admission et d'échappement permettant de contrôler l'ouverture et la fermeture des ports d'admission et d'échappement afin d'assurer la réalisation des trois phases du cycle précitées.

Il existe toutefois un besoin pour simplifier les mécanismes existants d'admission de l'air dans les chambres de combustion fonctionnant selon un cycle de combustion à volume constant.

### Objet et résumé de l'invention

La présente invention a notamment pour but de fournir un système de combustion à volume constant CVC ne présentant pas les inconvénients précités.

A cet effet, l'invention propose une chambre de combustion à volume constant pour turbomachine, la chambre de combustion comprenant un port d'admission, un port d'échappement, et un premier obturateur rotatif disposé en regard des ports d'admission et d'échappement et configuré pour tourner autour d'un axe de rotation dans un premier sens de rotation, le premier obturateur comprenant une lumière destinée à coopérer alternativement avec le port d'admission et le port d'échappement lors de la rotation du premier obturateur.

Selon une caractéristique générale de l'invention, la chambre de combustion comprend en outre au moins un second obturateur rotatif disposé en regard des ports d'admission et d'échappement et configuré pour tourner autour dudit axe de rotation dans un second sens de rotation opposé au premier sens de rotation, ledit second obturateur comprenant une lumière destinée à coopérer alternativement avec le port d'admission et le port d'échappement lors de la rotation dudit au moins un second obturateur, lesdits premier et second obturateurs étant synchronisés et configurés pour que leur lumière respective se croisent une première fois en regard du port d'admission et une seconde fois en regard du port d'échappement.

La chambre de combustion à obturateur tournant permet ainsi de piloter l'ouverture et la fermeture de la chambre de combustion sans contact et de manière plus performante qu'une chambre de combustion à simple obturateur rotatif.

L'utilisation d'au moins un second obturateur ajouré permet d'alimenter la chambre de combustion en améliorant la rapidité d'ouverture et de fermeture.

En outre, l'utilisation d'une superposition d'obturateurs permet d'allonger la distance et de complexifier le chemin à parcourir aux gaz de combustion pour fuir et ainsi d'améliorer l'étanchéité de la chambre de combustion.

L'invention permet en outre de réaliser de faibles pertes de charge à l'échappement et d'obtenir une haute réactivité entre l'ouverture et la fermeture des ports d'admission et d'échappement.

Selon un aspect de l'invention, les obturateurs peuvent être en matériaux composite à matrice céramique.

Un autre objet de l'invention propose un système de combustion à volume constant pour turbomachine comprenant au moins une chambre de combustion telle que défini ci-dessus et au moins une unité de commande configurée pour commander la rotation de obturateurs desdites au moins une chambre de combustion.

Un autre objet de l'invention propose une turbomachine comprenant un compresseur axial ou centrifuge et une turbine axiale ou centripète, la turbomachine comprenant en outre un système de combustion telle que définie ci-dessus, le système de combustion étant présent entre le compresseur et la turbine.

Encore un autre objet de l'invention propose un aéronef comprenant au moins un turbopropulseur, le turbopropulseur comprenant une turbomachine.

### Brève description des dessins

L'invention sera mieux comprise à la lecture faite ci-après, à titre indicatif mais non limitatif, en référence aux dessins annexés sur lesquels :
- la figure 1 illustre, de manière schématique, une vue en coupe d'une chambre de combustion utilisable dans le cadre de l'invention,
- la figure 2 présente, une vue schématique d'un obturateur de la chambre de combustion de la figure 1.

### Description détaillée de modes de réalisation

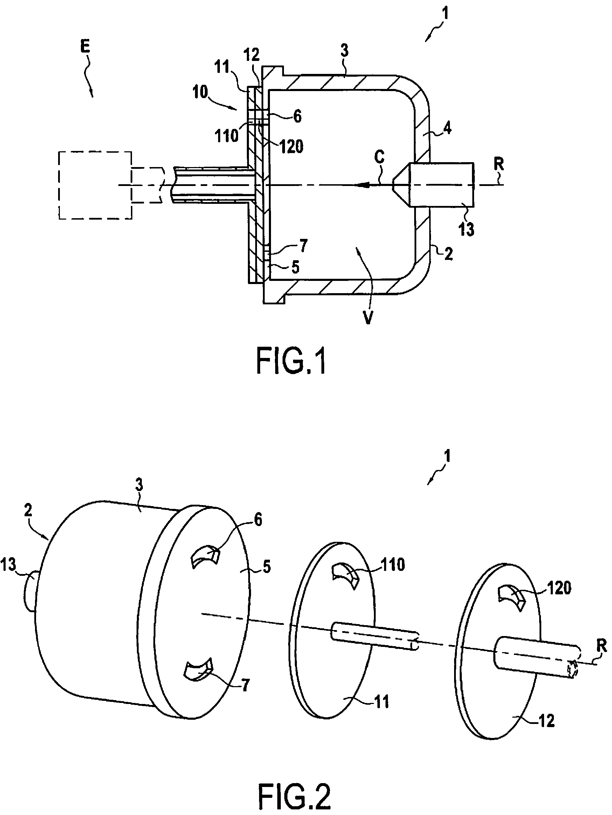

L'exemple illustré sur la figure 1 concerne une chambre de combustion dans laquelle la vanne d'admission d'air 10 est sous la forme de deux obturateurs rotatifs 11 et 12 dont l'axe de rotation R est fixé sur une paroi de la chambre de combustion.

La chambre de combustion 1 comprend une enceinte 2 qui délimite un volume intérieur V. Le volume intérieur V est délimité et entouré par l'enceinte 2. L'enceinte 2 a ici une forme sensiblement cylindrique. L'enceinte 2 peut, plus généralement, avoir une forme symétrique de révolution. D'autres formes sont toutefois envisageables pour l'enceinte 2 comme une forme parallélépipédique, par exemple.

La figure 1 représente une vue en coupe selon un plan comprenant l'axe de révolution de la chambre de combustion 1 selon l'invention, l'axe de révolution de la chambre 1 étant confondu avec l'axe de rotation R des obturateurs 11 et 12.

L'enceinte 2 comprend une paroi circonférentielle 3 qui est située autour du volume intérieur V de la chambre 1. L'enceinte 2 comprend en outre un premier fond 4 et un deuxième fond 5. Le premier fond 4 et le deuxième fond 5 délimitent chacun le volume intérieur V. Le premier fond 4 et le deuxième fond 5 sont situés de part et d'autre de la paroi circonférentielle 3.

La chambre de combustion 1 est munie d'un injecteur 13 de carburant placé ici sur le premier fond 4. La combustion peut être initiée de façon connue soit par un allumeur à étincelle (bougie), soit par un allumeur thermique à gaz (non représentés).

Dans l'exemple illustré, l'enceinte 3 définit un port d'admission 6 et un port d'échappement 7. On ne sortirait toutefois pas du cadre de l'invention si la chambre comprenait une pluralité de ports d'admission et/ou une pluralité de ports d'échappement. Le port d'admission 6 et le port d'échappement sont ici ménagés au travers du deuxième fond 5. Ils pourraient également être ménagés au travers de la paroi circonférentielle 3.

Dans cet exemple, chaque obturateur 11 et 12 est en matériau CMC, c'est-à-dire en un matériau comprenant un renfort fibreux densifié par une matrice au moins partiellement en céramique. L'enceinte 2 peut elle aussi être en matériau CMC ou, en variante, être en matériau métallique.

Dans un matériau CMC, le renfort fibreux peut être en fibres de carbone (C) ou en fibres de céramique, par exemple en fibres de carbure de silicium (SiC). Des fibres utilisables pour constituer ce renfort fibreux sont produites par la société japonaise Nippon Carbon sous la référence « Nicalon » ou « Hi-Nicalon » ou « Hi-Nicalon Type-S », ou par la société japonaise Ube Industries sous la référence « Tyranno-ZMI ». Les fibres de carbone utilisables sont, par exemple, fournies sous la dénomination Torayca T300 3K par la société Toray. Les fibres peuvent être revêtues d'une mince couche d'interphase en carbone pyrolytique (PyC), en nitrure de bore (BN) ou en carbone dopé au bore (BC, avec 5% at. à 20% at. de B, le complément étant C). Dans un matériau CMC, la matrice au moins partiellement en céramique. La matrice peut être composée à plus de 50% en masse par un matériau céramique. La matrice peut être constituée d'un matériau céramique. La matrice peut comporter au moins une phase de carbure de silicium, par exemple. La matrice peut être formée de manière connue en soi par infiltration chimique en phase gazeuse, ou CVI ("Chemical Vapor Infiltration"). La matrice peut aussi être au moins en partie formée par introduction de poudres, notamment poudres de carbone et éventuellement de céramique et infiltration par une composition métallique à base de silicium à l'état fondu, pour former une matrice de type SiC-Si. Un tel processus est bien connu et désigné couramment processus MI ("Melt Infiltration").

Comme illustré sur la figure 2 qui présente une vue schématique d'un obturateur de la chambre de combustion de la figure 1, chaque obturateur 11 et 12 possède une forme de disque avec une lumière 110 et 120 présentant une forme d'arc. La lumière 110 et 120 de chaque obturateur 11 et 12 est positionnée sur un cercle de même rayon, c'est-à-dire à une même distance du centre de rotation de l'obturateur 11 et 12 pour que les lumières 110 et 120 puissent se superposer lors de la rotation des obturateurs 11 et 12

Lors du fonctionnement de la chambre de combustion, les obturateurs 11 et 12 sont continuellement en rotation dans des sens de rotation opposé.

Avant le début de la combustion, les obturateurs 11 et 12 sont positionnés de sorte que les lumières 110 et 120 des obturateurs 11 et 12 soient alignées en regard du port d'amission 6. Ainsi, le volume intérieur V est en communication avec l'extérieur E de la chambre 1 avant initiation de la combustion permettant notamment l'injection d'air dans le volume intérieur V de la chambre de combustion 1. Cette communication est assurée par le port d'admission 6. Le port d'échappement 7 est, quant à lui, obturé par les obturateurs 11 et 12 avant le début de la combustion. On a illustré un exemple où il y a un unique port d'échappement 7. On ne sort toutefois pas du cadre de l'invention lorsque la chambre 1 est munie de plusieurs ports d'échappement 7.

La combustion est ensuite initiée par injection de carburant (flèche C) et allumage. L'initiation de la combustion conduit à faire augmenter la pression dans le volume intérieur V alors que les obturateurs continuent de pivoter jusqu'à ce que le port d'admission 6 ne soit plus ouvert sur l'extérieur E, c'est-à-dire jusqu'à ce qu'aucune des portions des lumières 110 et 120 ne soient en regard d'une portion de la lumière de l'autre obturateur.

Lorsque la combustion est terminée, le port d'échappement 7 est ouvert afin d'évacuer les gaz brûlés à l'extérieur de la chambre 1. Le port d'échappement 7 est ouvert par la superposition des lumières 110 et 120 des obturateurs 11 et 12 en regard du port d'échappement 7.

Le système de combustion qui vient d'être décrit peut être adapté à l'alimentation en gaz d'une turbomachine. Les gaz générés par le système de combustion peuvent permettre d'alimenter une turbine, comme une turbine de moteur d'aéronef.

L'invention fournit un système de combustion avec des mécanismes simplifiés d'admission et d'échappement de l'air dans les chambres de combustion fonctionnant selon un cycle de combustion à volume constant.

## Revendications

1. Chambre de combustion à volume constant (1) pour turbomachine, la chambre de combustion (1) comprenant un port d'admission (6), un port d'échappement (7), et un premier obturateur (11) rotatif disposé en regard des ports d'admission et d'échappement (6, 7) et configuré pour tourner autour d'un axe de rotation (R) dans un premier sens de rotation, le premier obturateur (11) comprenant une lumière (110) destinée à coopérer alternativement avec le port d'admission (6) et le port d'échappement (7) lors de la rotation du premier obturateur (11),
la chambre de combustion comprenant en outre au moins un second obturateur (12) rotatif disposé en regard des ports d'admission et d'échappement (6, 7) et configuré pour tourner autour dudit axe de rotation (R) dans un second sens de rotation opposé au premier sens de rotation, ledit second obturateur (12) comprenant une lumière (120) destinée à coopérer alternativement avec le port d'admission (6) et le port d'échappement (7) lors de la rotation dudit au moins un second obturateur (12), lesdits premier et second obturateurs (11, 12) étant synchronisés et configurés pour que leur lumière respective (110, 120) se croisent une première fois en regard du port d'admission (6) et une seconde fois en regard du port d'échappement (7).

2. Chambre de combustion (1) selon la revendication 1, dans lequel les obturateurs (11, 12) sont en matériaux composite à matrice céramique.

3. Système de combustion à volume constant pour turbomachine comprenant au moins une chambre de combustion (1) selon l'une des revendications 1 ou 2 et au moins une unité de commande configurée pour commander la rotation de obturateurs (11, 12) desdites au moins une chambre de combustion (1).

4. Turbomachine comprenant un compresseur axial ou centrifuge et une turbine axiale ou centripète, la turbomachine comprenant en outre un système de combustion (1) selon la revendication 3, le système de combustion étant présent entre le compresseur et la turbine.

5. Aéronef comprenant au moins un turbopropulseur, le turbopropulseur comprenant une turbomachine selon la revendication 4.

## Patentansprüche

1. Brennkammer (1) mit konstantem Volumen für Turbomaschinen, wobei die Brennkammer (1) eine Einströmöffnung (6), eine Ausströmöffnung (7) und einen ersten drehbaren Verschluss (11) umfasst, der der Einström- und der Ausströmöffnung (6, 7) gegenüberstehend angeordnet ist und dazu ausgestaltet ist, sich um eine Drehachse (R) in eine erste Drehrichtung zu drehen, wobei der erste Verschluss (11) einen Schlitz (110) umfasst, der dazu bestimmt ist, bei der Drehung des ersten Verschlusses (11) abwechselnd mit der Einströmöffnung (6) und der Ausströmöffnung (7) zusammenzuwirken,
wobei die Brennkammer ferner mindestens einen zweiten drehbaren Verschluss (12) umfasst, der der Einström- und der Ausströmöffnung (6, 7) gegenüberstehend angeordnet ist und dazu ausgestaltet ist, sich um die Drehachse (R) in eine zweite Drehrichtung zu drehen, die der ersten Drehrichtung entgegengesetzt ist, wobei der zweite Verschluss (12) einen Schlitz (120) umfasst, der dazu bestimmt ist, bei der Drehung des mindestens einen zweiten Verschlusses (12) abwechselnd mit der Einström- (6) und der Ausströmöffnung (7) zusammenzuwirken, wobei der erste und der zweite Verschluss (11, 12) synchronisiert sind und so ausgestaltet sind, dass ihre entsprechenden Schlitze (110, 120) sich ein erstes Mal der Einströmöffnung (6) gegenüberstehend und ein zweites Mal der Ausströmöffnung (7) gegenüberstehend kreuzen.

2. Brennkammer (1) nach Anspruch 1, wobei die Verschlüsse (11, 12) aus Verbundmaterial mit Keramikmatrix bestehen.

3. Brennsystem mit konstantem Volumen für Turbomaschinen, die mindestens eine Brennkammer (1) nach einem der Ansprüche 1 oder 2 und mindestens eine Steuereinheit umfasst, die dazu ausgestaltet ist, die Drehung der Verschlüsse (11, 12) der mindestens einen Brennkammer (1) zu steuern.

4. Turbomaschine, die einen Axial- oder Zentrifugalverdichter und eine Axial- oder Zentripetalturbine umfasst, wobei die Turbomaschine ferner ein Brennsystem nach Anspruch 3 umfasst, wobei das Brennsystem zwischen dem Verdichter und der Turbine vorhanden ist.

5. Luftfahrzeug, das mindestens eine Propellerturbine umfasst, wobei die Propellerturbine eine Turbomaschine nach Anspruch 4 umfasst.

## Claims

1. A constant volume combustion chamber (1) for a turbine engine, the combustion chamber (1) comprising an intake port (6), an exhaust port (7), and a first rotary shutter (11) facing the intake and exhaust ports (6, 7) and configured to rotate around an axis of rotation (R) in a first direction of rotation, the first shutter (11) comprising an aperture (110) intended to cooperate alternately with the intake port (6) and the exhaust port (7) during the rotation of the first shutter (11),
the combustion chamber further comprising at least one second rotary shutter (12) facing the intake and exhaust ports (6, 7) and configured to rotate around said axis of rotation (R) in a second direction of rotation opposite to the first direction of rotation, said second shutter (12) comprising an aperture (120) intended to cooperate alternately with the intake port (6) and the exhaust port (7) during the rotation of said at least one second shutter (12), said first and second shutters (11, 12) being synchronized and configured so that their respective apertures (110, 120) intersect a first time when both are facing the intake port (6) and a second time when both are facing the exhaust port (7).

2. The combustion chamber (1) according to claim 1, wherein the shutters (11, 12) are made of ceramic matrix composite materials.

3. A constant volume combustion system for a turbine engine comprising at least one combustion chamber (1) according to claim 1 or 2 and at least one control unit configured to control the rotation of shutters (11, 12) of said at least one combustion chamber (1).

4. A turbine engine comprising an axial or centrifugal compressor and an axial or centripetal turbine, the turbine engine further comprising a combustion system according to claim 3, the combustion system being present between the compressor and the turbine.

5. An aircraft comprising at least one turboprop, the turboprop comprising a turbine engine according to claim 4.
